(19) Europäisches Patentamt / European Patent Office / Office européen des brevets

(11) **EP 4 640 779 A1**

(12) **EUROPEAN PATENT APPLICATION**
published in accordance with Art. 153(4) EPC

(43) Date of publication:
29.10.2025 Bulletin 2025/44

(51) International Patent Classification (IPC):
*C09J 5/00* (2006.01)   *C09J 163/00* (2006.01)
*C09J 171/10* (2006.01)

(21) Application number: 23907000.6

(22) Date of filing: 18.12.2023

(52) Cooperative Patent Classification (CPC):
C09J 5/00; C09J 163/00; C09J 171/10

(86) International application number:
PCT/JP2023/045380

(87) International publication number:
WO 2024/135640 (27.06.2024 Gazette 2024/26)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 19.12.2022 JP 2022202525

(71) Applicant: Resonac Corporation
Tokyo 105-7325 (JP)

(72) Inventor: TAKAHASHI, Nobuyuki
Tokyo 105-7325 (JP)

(74) Representative: Strehl & Partner mbB
Maximilianstrasse 54
80538 München (DE)

(54) **METHOD FOR PRODUCING JOINED OBJECT**

(57)     [Problem] To provide a joining technique for joining a base material A, which is a fiber reinforced plastic base material, to a base material B, which is a metal base material, the joining technique attaining a short joining process time and a long open time and providing excellent joining property.

[Solution] A method for producing a joined body, the method including: a pre-joining step in which a laminated body is prepared by arranging, in the following order, a base material A, which is a fiber reinforced plastic base material, a solid joining agent containing an amorphous thermoplastic resin, which is at least one selected from a thermoplastic epoxy resin and a phenoxy resin, and a base material B, which is a metal base material; and a joining step in which the laminated body is heated and pressurized to melt the solid joining agent and join the base material A and the base material B. The amorphous thermoplastic resin has an epoxy equivalent of 1,600 or more or does not contain an epoxy group and has a heat of fusion of 15 J/g or less.

[Fig. 1]

**Description**

Technical Field

The present invention relates to a method for producing a joined body which is suitable for applications in which different kinds of materials are easily and firmly joined.

Background Art

In recent years, multi-materialization of parts in various fields, such as automobile parts, medical equipment, and home appliances, has been progressing from the viewpoint of weight reduction and high capability of products. The multi-materialization is a method of reducing the weight of a material and increasing the strength of the material by using materials (hereinafter, referred to as different kinds of materials) having different functions and materials in combination. In order to realize the multi-materialization, a technique for firmly joining the different kinds of materials is indispensable.

As a means for firmly joining the different kinds of materials, a thermosetting epoxy resin-based adhesive (PTL 1 and the like) which is a liquid type adhesive is widely used.

Joining using a liquid type adhesive requires an application step of applying a liquid resin composition and a curing step of polymerizing and curing the resin composition after the application.

Therefore, when the joining is performed using the liquid type adhesive, there is a problem that it takes a long time to coat the resin composition in the coating step, and it takes a long time for the polymerization reaction in the curing step (that is, the joining process takes a long time), resulting in a lack of convenience.

In the description herein, the joining process time means a time from a start point to an end point with a contact time between at least one base material and a joining agent constituting a joined body as the start point and a completion time of the production of the joined body as the end point. For example, the joining process time includes a time required for a step of applying a liquid adhesive to the base material, a time required for a drying step, a time required for a step of placing a solid joining agent, and a time required for bonding the base materials to each other (for example, curing an adhesive layer).

A technique has also been disclosed in which an epoxy resin composition is impregnated or coated on a base material and then semi-cured (B-staged) to form a laminated body having a B-stage-shaped adhesive layer, which is used for producing a joined body (PTL 2 and the like).

However, joining using a B-stage-shaped adhesive layer also requires a curing step of curing the adhesive layer in a semi-cured state by polymerization reaction, and there is a problem that the joining process time is long.

In addition, the B-stage-shaped adhesive has problems that the storage stability is poor, the long-term storage at ordinary temperature is not possible, the storage at a low temperature is required, the open time is short, and the convenience is lacking.

In the description herein, the open time means a limited time from when a joining agent is applied or placed on a base material A to when a base material B is completely placed on the metal base material A. Within the open time, the bonding force of the joining agent is not reduced, and the base material A and the base material B can be bonded to each other with a sufficient bonding force. The longer the open time is, the longer the time limit from the application or placement of the joining agent on the base material A to the completion of the placement of the base material B becomes, which is highly convenient.

As a means for joining different kinds of materials, a thermoplastic adhesive composition (hereinafter, referred to as a hot-melt adhesive) is also used (PTL 3 and the like). By using the hot-melt adhesive, specifically, since the hot-melt adhesive performs adhesion by utilizing a phase change that does not involve a polymerization reaction, an application step is unnecessary, the curing time is short (that is, the joining process time is short), and the convenience is excellent. Further, it can be stored at ordinary temperature for a long period of time, and is excellent in convenience in that the open time is long.

However, since the conventional hot-melt adhesive is composed of a crystalline resin or a resin containing a crystalline resin in order to lower the melt viscosity, the cohesive force in the adhesive resin is high, and the hot-melt adhesive cannot have a sufficient interaction with the base material. In addition, during melting and adhesion, the viscosity becomes low at high temperatures, and it is easy to flow out from the bonding surface, and the film thickness is not stable because it is difficult to control the viscosity. Due to these factors, there is a problem that a high bonding force cannot be stably obtained with a conventional hot-melt adhesive.

Citation List

Patent Literature

PTL 1:JP 2019-157018 A
PTL 2:JPH 10-17685 A
PTL 3:JPH 10-168417 A

Summary of Invention

Technical Problem

As described above, among the conventional techniques, the thermosetting epoxy resin-based adhesive having excellent adhesiveness has at least one problem of a long joining process time and a short open time in both liquid and B-stage forms, and there has been a problem that a hot-melt adhesive having a short joining process time and a long open time cannot stably obtain high bonding force.

The present invention has been made in view of such a technical background, and an object of the present invention is to provide a joining technique for joining a base material A, which is a fiber reinforced plastic base material, to a base material B, which is a metal base material, the joining technique attaining a short joining process time and a long open time and providing excellent adhesiveness.

Solution to Problem

In order to achieve the above object, the present invention provides the following means.

In the description herein, the term "joining" means coupling materials together, and adhesion (bonding) and welding are narrower concepts thereof. The term "adhesion" means that two adherends (to be adhered to each other) are placed in a joined state through an organic material (such as thermosetting resins and thermoplastic resins) such as a tape and an adhesive, and the term "welding" means that the surface of a thermoplastic resin is melted by heat and brought into a joined state by entanglement and crystallization due to molecular diffusion by contact pressurization and cooling.

<Method for Producing Joined Body>

[1] A method for producing a joined body, the method including:

a pre-joining step in which a laminated body is prepared by arranging, in the following order, a base material A, which is a fiber reinforced plastic base material, a solid joining agent containing an amorphous thermoplastic resin, which is at least one selected from a thermoplastic epoxy resin and a phenoxy resin, and a base material B, which is a metal base material; and
a joining step in which the laminated body is heated and pressurized to melt the solid joining agent and join the base material A and the base material B,
in which the amorphous thermoplastic resin has an epoxy equivalent of 1,600 or more or does not contain an epoxy group and has a heat of fusion of 15 J/g or less.

[2] The method for producing a joined body according to [1], in which the heating and pressurizing are performed under conditions of 100°C to 400°C and 0.01 to 20 MPa.
[3] The method for producing a joined body according to [1] or [2], in which the solid joining agent before melting has a film shape.
[4] A method for producing a joined body obtained by joining, in the following order, a base material A, which is a fiber reinforced plastic base material, a solid joining agent containing an amorphous thermoplastic resin, which is at least one selected from a thermoplastic epoxy resin and a phenoxy resin, and a base material B, which is a metal base material, the method including:

a first joining step of joining the base material A and the solid joining agent by melting and then solidifying the solid joining agent in a state in which the solid joining agent is in contact with the base material A, or joining the base material B and the solid joining agent by melting and then solidifying the solid joining agent in a state in which the solid joining agent is in contact with the base material B; and

a second joining step of joining the base material A and the base material B by melting and then solidifying the solid joining agent in a state in which the solid joining agent joined to the base material A is in contact with the base material B, or joining the base material A and the base material B by melting and then solidifying the solid joining agent in a state in which the solid joining agent joined to the base material B is in contact with the base material A; in which the amorphous thermoplastic resin has an epoxy equivalent of 1,600 g/eq. or more or does not contain an epoxy group and has a heat of fusion of 15 J/g or less.

[5] The method for producing a joined body according to [4], in which in the first joining step, the solid joining agent is heated to 100°C to 300°C to be melted and then solidified.

[6] The method for producing a joined body according to [4] or [5], in which in the second joining step, the solid joining agent is melted by at least one selected from the group consisting of contact heating, warm air heating, hot press, infrared heating, hot plate welding, ultrasonic welding, vibration welding, and high-frequency induction welding and then solidified.

[7] The method for producing a joined body according to any of [4] to [6], in which in the second joining step, the solid joining agent is melted at a heating temperature of 100°C to 400°C under a pressure of 0.01 to 20 MPa and then solidified.

[8] The method for producing a joined body according to any of [1] to [7], in which the solid joining agent before melting has a film shape.

<Joined Body>

[9] A joined body obtained by joining a base material A, which is a fiber reinforced plastic base material, and a base material B, which is a metal base material, via an adhesive layer,
in which the adhesive layer is formed by disposing a solid joining agent containing an amorphous thermoplastic resin, which is at least one selected from a thermoplastic epoxy resin and a phenoxy resin, and has an epoxy equivalent of 1,600 or more and a heat of fusion of 15 J/g or less, between the base material A and the base material B, melting the solid joining agent by heating and pressurizing, and solidifying the solid joining agent.

[10] The joined body according to [9], in which the heating and pressurizing are performed under conditions of 100°C to 400°C and 0.01 to 20 MPa.

Advantageous Effects of Invention

According to the present invention, it is possible to provide a joining technique for joining a base material A, which is a fiber reinforced plastic base material, to a base material B, which is a metal base material, the joining technique attaining a short joining process time and a long open time and providing excellent joining property.

Brief Description of Drawings

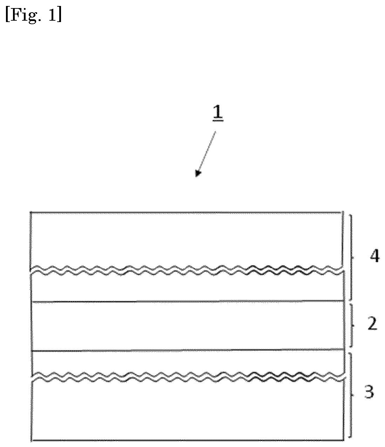

[Fig. 1] Fig. 1 is an illustrative view illustrating a configuration of a joined body in one embodiment of the present invention.

Description of Embodiments

[Method for Producing Joined Body _ Embodiment 1]

The method for producing a joined body of Embodiment 1 includes a pre-joining step in which a laminated body is prepared by arranging, in the following order, a base material A, which is a fiber reinforced plastic base material, a solid joining agent containing an amorphous thermoplastic resin, which is at least one selected from a thermoplastic epoxy resin and a phenoxy resin, and a base material B, which is a metal base material; and a joining step in which the laminated body is heated and pressurized to melt the solid joining agent and join the base material A and the base material B.

In the pre-joining step, joining between the base material A and the solid joining agent and joining between the base material B and the solid joining agent are not performed, and joining is performed in the next joining step. The solid joining agent may have tackiness, and in this case, the solid joining agent is temporarily fixed to the base material in the pre-joining step.

Each step will be described below.

<Pre-joining Step>

In the pre-joining step, a laminated body is prepared by arranging, in the following order, a base material A, a solid joining agent containing an amorphous thermoplastic resin, which is at least one selected from a thermoplastic epoxy resin and a phenoxy resin, and a base material B.

The laminated body is formed by superposing independent members without joining any of the base material A to the solid joining agent and the solid joining agent to the base material B.

The term "solid" in the solid joining agent means that the material is solid at ordinary temperature, that is, the material does not have fluidity in a non-pressurized state at 23°C.

It is desirable that the solid joining agent has such a property that the solid joining agent can retain its outer shape without deformation for 30 days or more in a state where pressure is not applied at 23°C, and further, the solid joining agent does not change in quality.

(Solid Joining Agent)

The solid joining agent contains an amorphous thermoplastic resin which is at least one selected from a thermoplastic epoxy resin and a phenoxy resin, has an epoxy equivalent of 1,600 or more, and a heat of fusion of 15 J/g or less.

The amorphous resin in the present invention is a resin having a melting point (Tm) but having no or very small endothermic peak (melting point) associated with clear melting in measurement using a differential scanning calorimeter (DSC). The heat of fusion is calculated from the area of the endothermic peak of DSC and the weight of the thermoplastic resin component. When an inorganic filler or the like is contained in the solid joining agent, the heat of fusion is calculated from the weight of the resin component excluding the inorganic filler. Specifically, the amorphous thermoplastic resins in the present invention refer to the following. A sample is weighed in an amount of 2 to 10 mg, placed in an aluminum pan, and heated from 23°C to 200°C or higher at a rate of 10°C/min by DSC (DSC8231, manufactured by Rigaku Corporation) to obtain a DSC curve. Next, the heat of fusion is calculated from the area of the endothermic peak at the time of melting obtained from the DSC curve and the above-mentioned weighed value, and the resin having a heat of fusion of 15 J/g or less is selected.

From the viewpoint of sufficiently imparting the characteristics of the amorphous thermoplastic resin to the solid joining agent, the content of the amorphous thermoplastic resin is preferably 51% by mass or more, more preferably 60% by mass or more, still more preferably 70% by mass or more, particularly preferably 80% by mass or more, and most preferably 90% by mass or more of the resin components in the solid joining agent. In the present disclosure, the "resin component in the solid thermally conductive material" means a component other than the filler in the solid thermally conductive material.

The heat of fusion is 15 J/g or less, preferably 11 J/g or less, more preferably 7 J/g or less, and still more preferably 4 J/g or less, and the melting peak is most preferably equal to or less than the detection limit.

The epoxy equivalent is 1,600 or more, preferably 2,000 or more, more preferably 5,000 or more, and further preferably 9,000 or more, and it is most preferable that the epoxy equivalent is equal to or higher than the detection limit and the epoxy group is not substantially detected.

By using a solid joining agent containing an amorphous thermoplastic resin having an epoxy equivalent of 1,600 or more and a heat of fusion of 15 J/g or less, a rapid decrease in viscosity as seen in a conventional hot-melt adhesive does not occur during heating, and a low viscosity (0.001 to 100 Pa·s) state is not reached even in a high temperature region of higher than 200°C. Therefore, the solid joining agent does not flow out from a laminated body even in a molten state, and the thickness of the adhesive layer can be stably ensured, and a high bonding force can be stably obtained.

The epoxy equivalent (the weight of the resin containing 1 mol of epoxy group) referred to herein is a value of the epoxy equivalent of the thermoplastic epoxy resin or phenoxy resin component contained in the solid joining agent before joining, and is a value (unit "g/eq.") measured by a method specified in JIS-K 7236:2001. Specifically, the epoxy equivalent is a value obtained by adding a brominated tetraethylammonium acetic acid solution using a potentiometric titration device, using cyclohexanone as a solvent, using a 0.1 mol/L perchloric acid-acetic acid solution, and calculating a numerical value of a solvent diluted product (resin varnish) as a value in terms of a solid content from a nonvolatile component. In the case of a mixture of two or more kinds of resins, it is also possible to calculate from the content of each resin and the epoxy equivalent.

The melting point of the amorphous thermoplastic resin contained in the solid joining agent is preferably 50°C to 400°C, more preferably 60°C to 350°C, and still more preferably 70°C to 300°C. When the melting point is in the range of 50°C to 400°C, the solid joining agent is efficiently deformed and melted by heating and effectively wets and spreads on the adhesion surface, so that a high bonding force can be obtained.

In the description herein, the melting point of the amorphous thermoplastic resin means a temperature range of a process in which the amorphous thermoplastic resin is substantially softened from a solid state, becomes thermoplastic, and can be melted and adhered.

The conventional thermosetting adhesive has problems that it is difficult to disassemble the joined body, it is difficult to separate and recycle different kinds of materials constituting the joined body (i.e., poor in recycling property), and it is difficult to reattach the joined body when the joining portion is displaced in the production process of the joined body or when the contents or the adherend has a defect and needs to be replaced (i.e., poor in repairing property), thus lacking convenience. However, the solid joining agent can be softened and melted by heat and can be easily peeled off, so it has excellent recycling property. In addition, since the solid joining agent is thermoplastic, it can be reversibly softened, melted, and cured repeatedly, and is also excellent in repairing property.

<<Thermoplastic Epoxy Resin>>

The thermoplastic epoxy resin is preferably a polymer of (a) a bifunctional epoxy resin monomer or oligomer and (b) a bifunctional compound having two identical or different functional groups selected from the group consisting of a phenolic hydroxy group, a carboxy group, a mercapto group, an isocyanate group, and a cyanate ester group.

By using such a compound, the polymerization reaction for forming a linear polymer preferentially proceeds, and a thermoplastic epoxy resin having desired properties can be obtained.

The bifunctional epoxy resin monomer or oligomer (a) refers to an epoxy resin monomer or oligomer having two epoxy groups in the molecules.

Specific examples of the above (a) include, for example, bisphenol A type epoxy resins, bisphenol F type epoxy resins, bifunctional phenol novolac type epoxy resins, bisphenol AD type epoxy resins, biphenyl type epoxy resins, bifunctional naphthalene type epoxy resins, bifunctional alicyclic epoxy resins, bifunctional glycidyl ester type epoxy resins (e.g., diglycidyl phthalate, diglycidyl tetrahydrophthalate, dimer acid diglycidyl ester, etc.), bifunctional glycidyl amine type epoxy resins (e.g., diglycidyl aniline, diglycidyl toluidine, etc.), bifunctional heterocyclic epoxy resins, bifunctional diaryl sulfone type epoxy resins, hydroquinone type epoxy resins (e.g., hydroquinone diglycidyl ether, 2,5-di-tert-butylhydroquinone diglycidyl ether, resorcin diglycidyl ether, etc.), bifunctional alkylene glycidyl ether-based compounds (e.g., butanediol diglycidyl ether, butenediol diglycidyl ether, butynediol diglycidyl ether, etc.), bifunctional glycidyl group-containing hydantoin compounds (e.g., 1,3-diglycidyl-5,5-dialkylhydantoin, 1-glycidyl-3-(glycidoxyalkyl)-5,5-dialkylhydantoin, etc.), bifunctional glycidyl group-containing siloxanes (e.g., 1,3-bis(3-glycidoxypropyl)-1,1,3,3-tetramethyldisiloxane, $\alpha,\beta$-bis(3-glycidoxypropyl)polydimethylsiloxane, etc.), and modified products thereof. Among these, a bisphenol A type epoxy resin, a bisphenol F type epoxy resin, and a biphenyl type epoxy resin are preferred from the viewpoint of reactivity and workability.

Examples of the bifunctional compound having a phenolic hydroxy group of the above (b) include mononuclear aromatic dihydroxy compounds having one benzene ring such as catechol, resorcin, and hydroquinone; bisphenols such as bis(4-hydroxyphenyl)propane (bisphenol A), bis(4-hydroxyphenyl)methane (bisphenol F), and bis(4-hydroxyphenyl) ethane (bisphenol AD); compounds having a condensed ring such as dihydroxynaphthalene; bifunctional phenol compounds having an allyl group introduced therein, such as diallylresorcin, diallylbisphenol A, and triallyldihydroxybiphenyl; and dibutylbisphenol A.

Specific examples of the carboxy group-containing compound of the above (b) include adipic acid, succinic acid, malonic acid, cyclohexanedicarboxylic acid, phthalic acid, isophthalic acid, and terephthalic acid.

Examples of the mercapto group-containing bifunctional compound of the above (b) include ethylene glycol bisthioglycolate and ethylene glycol bisthiopropionate.

Specific examples of the bifunctional compound having an isocyanate group of the above (b) include diphenylmethane diisocyanate (MDI), isophorone diisocyanate (IPDI), hexamethylene diisocyanate (HMDI), and tolylene diisocyanate (TDI).

Specific examples of the cyanate ester group-containing bifunctional compound of the above (b) include 2,2-bis(4-cyanatophenyl)propane, 1,1-bis(4-cyanatophenyl)ethane, and bis(4-cyanatophenyl)methane.

Among the above (b), a bifunctional compound having a phenolic hydroxy group is preferred from the viewpoint of obtaining a polymer having thermoplasticity, a bifunctional compound having two phenolic hydroxy groups and having a bisphenol structure or a biphenyl structure is preferred from the viewpoint of heat resistance and adhesiveness, and bisphenol A, bisphenol F or bisphenol S is preferred from the viewpoint of heat resistance and cost.

When the above (a) is a bisphenol A type epoxy resin, a bisphenol F type epoxy resin, a bisphenol S type epoxy resin, or a biphenyl type epoxy resin and the above (b) is bisphenol A, bisphenol F, or bisphenol S, the polymer obtained by polymerization of the above (a) and (b) has a structure in which a paraphenylene structure and an ether bond are used as a main skeleton, a main chain formed by connecting them with an alkylene group, and a hydroxy group generated by polyaddition are arranged in a side chain.

The linear structure composed of the paraphenylene skeleton can increase the mechanical strength of the polymer after polymerization, and the arranged hydroxy group in the side chain can improve the adhesion to the base materials. As a result, high bonding strength can be realized while maintaining the workability of the thermosetting resin.

Further, in the case of a thermoplastic resin, the resin can be recycled and repaired by softening and melting the resin by heat, and the recycling property and the repairing property which are problems in a thermosetting resin can be improved.

<<Phenoxy Resin>>

The phenoxy resin is a polyhydroxy polyether synthesized from bisphenols and epichlorohydrin, and has thermoplasticity. For the production of the phenoxy resin, a method by a direct reaction of a dihydric phenol and epichlorohydrin, and a method by an addition polymerization reaction of a diglycidyl ether of a dihydric phenol and a dihydric phenol are known, and the phenoxy resin used in the present invention may be obtained by any production method. In the case of the direct reaction between a dihydric phenol and epichlorohydrin, examples of the dihydric phenol include phenols such as bisphenol A, bisphenol F, bisphenol S, biphenol, biphenylene diol, and fluorene diphenyl; and aliphatic glycols such as ethylene glycol, propylene glycol, and diethylene glycol. Among them, bisphenol A, bisphenol F, and bisphenol S are preferable from the viewpoints of cost, adhesiveness, viscosity, and heat resistance. One kind thereof may be used singly, or two or more kinds thereof may be used in combination.

The phenoxy resin has a chemical structure similar to that of an epoxy resin and has a structure in which a para-phenylene structure and an ether bond are used as a main skeleton, a main chain connecting them, and a hydroxy group is disposed in a side chain.

<<Physical Properties of Thermoplastic Epoxy Resin and Phenoxy Resin>>

The thermoplastic epoxy resin and phenoxy resin preferably have a weight average molecular weight of 10,000 to 500,000, more preferably 18,000 to 300,000, and still more preferably 20,000 to 200,000, which is a value in terms of polystyrene as measured by gel permeation chromatography (GPC). The weight average molecular weight is calculated from an elution peak position detected by GPC, and is a value of a molecular weight in terms of standard polystyrene. When the weight average molecular weight is in the range of this value, the balance between the thermoplasticity and the heat resistance is good, the joined body is efficiently obtained by melting, and the heat resistance thereof is increased. When the weight average molecular weight is 10,000 or more, the heat resistance is excellent, and when it is 500,000 or less, the viscosity at the time of melting is low, and the adhesiveness is increased.

<<Components other than Resin Component in Solid Joining Agent>>

If necessary, the solid joining agent may contain fillers or additives as components other than the resin components within a range that does not hinder the object of the present invention.
Examples of the filler include an inorganic filler and an organic filler (resin powder).
Examples of the inorganic filler include spherical fused silica, metal powder of metal such as iron, silica sand, talc, calcium carbonate, mica, acid clay, diatomaceous earth, kaolin, quartz, titanium oxide, silica, phenol resin microballoons, and glass balloons.
In a case where the solid joining agent contains a filler, the content of the filler in 100% by volume of the total amount of the solid joining agent is preferably 50% by volume or less, more preferably 30% by volume or less, still more preferably 20% by volume or less, and most preferably 10% by volume or less.
The content (% by volume) of the filler is determined from the charged amount at 25°C, and specifically, is calculated by the following (Formula 1) based on the specific gravity of the components other than the filler and the true specific gravity of the filler with respect to % by mass of the filler.

$$(\text{Formula 1})$$

$$X = (MF/DF) \div (MF/DF + (100 - MF)/DR) \times 100\%$$

In (Formula 1),

X: the content (% by volume) of the filler,
MF: the charged amount (% by mass) of the filler,
DR: the specific gravity at the time of curing the resin component, and
DF: the true specific gravity of the filler.

Examples of the additive include a defoaming agent, a coupling agent such as a silane coupling agent, and a pigment, and one or two or more of these may be contained.
The content of the additives in the solid joining agent is preferably 10% by mass or less, more preferably 5% by mass or less, and still more preferably 1% by mass or less.

The content of the resin component in the solid joining agent is preferably 10% by mass or more, more preferably 20% by mass or more, still more preferably 30% by mass or more, and even more preferably 50% by mass or more, and in one embodiment, 80% by mass or more, in another embodiment, 90% by mass or more, and in another embodiment, 99% by mass or more.

<<Method for Producing Solid Joining Agent>>

The method for producing the solid joining agent is not particularly limited, but the solid joining agent is obtained, for example, by heating and polymerizing a monomer or oligomer of a bifunctional epoxy compound. During the polymerization, a solvent may be added to reduce the viscosity and facilitate stirring. In the case of adding a solvent, it is necessary to remove the solvent, and a solid joining agent may be obtained by performing drying or polymerization or both of them on a release film or the like.

Examples of the additive include a viscosity modifier, an inorganic filler, an organic filler (resin powder), an antifoaming agent, a coupling agent such as a silane coupling agent, and a pigment, and these can be used alone or in combination of one or two or more kinds thereof.

As the viscosity modifier, for example, a reactive diluent can be used.

Examples of the inorganic filler include spherical fused silica, metal powder of metal such as iron, silica sand, talc, calcium carbonate, mica, acid clay, diatomaceous earth, kaolin, quartz, titanium oxide, silica, phenol resin microballoons, and glass balloons.

The solid joining agent thus obtained has excellent storage stability and can be stored at ordinary temperature for a long period of time because the content of unreacted monomers and terminal epoxy groups is small or substantially zero.

The form of the solid joining agent is not particularly limited, but preferably has any shape selected from the group consisting of a film, a rod, a pellet, and a powder. In particular, at least one side of the outer shape is preferably 5 mm or less, more preferably 3 mm or less, still more preferably 1 mm or less, even more preferably 0.5 mm or less, and most preferably 0.3 mm or less. When the size is in such a range, it can be sandwiched between the base material A and the base material B and efficiently spread on the bonding surface by heating and pressurization, and a high bonding force can be obtained.

The solid joining agent may have tackiness to the extent that the bonding force and the heat resistance thereof are not impaired. In this case, the solid joining agent is temporarily fixed to the base material in the laminated body preparation step.

<Joining Step>

In the joining step, the laminated body is heated and pressurized to melt the solid joining agent, and then the temperature is lowered to solidify the solid joining agent, thereby joining the base material A and the base material B.

The temperature in the heating and pressurizing is preferably 100°C to 400°C, more preferably 120°C to 350°C, and still more preferably 150°C to 300°C. By heating to 100°C to 400°C, the solid joining agent is efficiently deformed and melted and effectively wets and spreads on the bonding surface, whereby a high bonding force is obtained.

The pressurization force in the heating and pressurization is preferably 0.01 to 20 MPa, more preferably 0.1 to 10 MPa, and still more preferably 0.2 to 5 MPa. When the pressure is in such a range, the solid joining agent is efficiently deformed to effectively wet and spread on the bonding surface, so that a high bonding force can be obtained. In a case where at least one of the base material A and the base material B is a thermoplastic resin, by pressurizing at 0.01 to 20 MPa, the solid joining agent and the base material are made compatible with each other and a strong bonding force can be obtained.

Since the amorphous thermoplastic resin contained in the solid joining agent has a low cohesive force in the resin and has a hydroxy group, the amorphous thermoplastic resin has a strong interaction with the base material and can join different kinds of materials with a higher bonding force than that of a conventional crystalline hot-melt adhesive.

The joining of the base material A and the base material B utilizes the phase change (solid to liquid to solid) of the solid joining agent and does not involve a chemical reaction, so that the joining can be completed in a shorter time than that of the conventional thermosetting epoxy resin.

[Method for Producing Joined Body _ Embodiment 2]

The method for producing a joined body according to the present embodiment is a method for producing a joined body obtained by joining, in the following order, a base material A, which is a fiber reinforced plastic base material, a solid joining agent containing an amorphous thermoplastic resin, which is at least one selected from a thermoplastic epoxy resin and a phenoxy resin, and a base material B, which is a metal base material, the method including: a first joining step of joining the base material A and the solid joining agent by melting and then solidifying the solid joining agent in a state in which the solid joining agent is in contact with the base material A, or joining the base material B and the solid joining agent by melting and then solidifying the solid joining agent in a state in which the solid joining agent is in contact with the base material B; and a second joining step of joining the base material A and the base material B by melting and then solidifying the solid joining agent in a state in which the solid joining agent joined to the base material A is in contact with the base material B, or joining the base material A and the base material B by melting and then solidifying the solid joining agent in a state in which the solid joining agent joined to the base material B is in contact with the base material A; in which the amorphous thermoplastic resin has an epoxy equivalent of 1,600 g/eq. or more or does not contain an epoxy group and has a heat of fusion of 15 J/g or less.

According to the production method, the joining of the base material A and the base material B utilizes a phase change (solid to liquid to solid) of a solid joining agent containing an amorphous thermoplastic resin, which is at least one selected from a thermoplastic epoxy resin and a phenoxy resin, and does not involve a chemical reaction, so that the joining can be completed in a shorter time than that of a conventional thermosetting epoxy resin, and the open time is also longer. In addition, since the thermoplastic epoxy resin and the phenoxy resin have a low cohesive force in the resins and have a hydroxy group, they interact strongly with the base material, and can join different kinds of materials with a higher joining force than conventional crystalline hot-melt adhesives.

In addition, in the production method, the joining is performed by dividing the steps into a first joining step and a second joining step. By dividing the steps in this way, joining can be performed by heating at a temperature suitable for the joining interface, and a joined body having excellent joining property can be produced. In addition, heating temperature control is also easier than in a case where the steps are not divided. Further, by joining the solid joining agent to the base material A in advance, it is possible to accurately join the base material A and the base material B, and it is possible to suppress the occurrence of deviation at the joined portion.

<First Joining Step>

The first joining step is a step of joining the base material A and the solid joining agent by melting and then solidifying the solid joining agent in a state in which the solid joining agent is in contact with the base material A, or a step of joining the base material B and the solid joining agent by melting and then solidifying the solid joining agent in a state in which the solid joining agent is in contact with the base material B.

By joining the base material A or the base material B and the solid joining agent in advance in the first joining step, it is possible to join the base material A and the base material B with high accuracy.

In the description herein, the term "solidified" means that the material is solid at ordinary temperature, that is, the material does not have fluidity in a non-pressurized state at 23°C. However, the film after the first joining step may have tackiness.

Examples of the method for melting the solid joining agent include at least one method selected from the group consisting of contact heating, warm air heating, hot press, hot plate welding, infrared heating, ultrasonic welding, vibration welding, and high-frequency induction welding. Among these, infrared heating is preferable from the viewpoint of ease of production and shortening of the joining process.

In a case where the solid joining agent is melted by heating, the temperature of the joining surface of the base material A or the base material B with the solid joining agent is preferably heated to 100°C to 300°C and melted, more preferably 120°C to 250°C, and still more preferably 150°C to 220°C. By heating to 100°C to 300°C, the film is efficiently deformed and melted and effectively wets and spreads on the joining surface, whereby a high joining force is obtained.

Examples of the method for solidifying the molten solid joining agent include a method in which the film is allowed to cool at ordinary temperature and a method in which the film is allowed to cool using a cooling device. The term "ordinary temperature" means a general room temperature in the range of 5°C to 30°C. Among these, a method in which the film is allowed to cool at ordinary temperature is preferable from the viewpoint of ease of production.

(Solid Joining Agent)

The solid joining agent is the same as in Embodiment 1 above, but the solid joining agent in the present embodiment is preferably a film. In the present disclosure, the film means a sheet-shaped material having a thickness of 10 $\mu$m to 3 mm.

<<Form of Film>>

The thickness of the film is preferably 1 mm or less, more preferably 0.5 mm or less, still more preferably 0.3 mm or less, even more preferably 0.2 mm or less, and most preferably 0.1 mm or less, from the viewpoint of obtaining a joined body having excellent joining property in a short joining process time.

When the size is in such a range, it can be sandwiched between the base material A and the base material B and efficiently spread on the joining surface by heating, pressurization or the like, and a high joining force can be obtained.

The film may be a single layer or a laminated body including a plurality of layers, but is preferably a single layer from the viewpoint of ease of production and improvement of joining force.

In addition, the film may have tackiness to the extent that the joining force and the heat resistance thereof are not impaired.

<<Method for Producing Film>>

The method for producing the film is not particularly limited, but for example, a resin composition is obtained by heating and polymerizing a monomer or oligomer of a bifunctional epoxy compound, a solvent is added to the obtained resin composition as necessary, the composition is applied to a release film or the like, cured and dried, and pressurized as necessary to obtain a film.

<Second Joining Step>

The second joining step is a step of joining the base material A and the base material B by melting and then solidifying the solid joining agent in a state in which the solid joining agent joined to the base material A is in contact with the base material B, or a step of joining the base material A and the base material B by melting and then solidifying the solid joining agent in a state in which the solid joining agent joined to the base material B is in contact with the base material A.

From the viewpoint of obtaining a high joining force, in the second joining step, it is preferable to heat the solid joining agent at a temperature equal to or higher than the melting point of at least one of the resin A and the solid joining agent to melt and then solidify the solid joining agent. By heating at a temperature equal to or higher than the melting point of at least one of the resin A and the solid joining agent, the solid joining agent and the base material are compatibilized, and a stronger joining force is easily obtained.

Examples of the method for melting the solid joining agent include at least one method selected from the group consisting of contact heating, warm air heating, hot press, infrared heating, hot plate welding, ultrasonic welding, vibration welding, and high-frequency induction welding. Among these, hot press, ultrasonic welding, and high-frequency induction welding are preferable.

The conditions in the case of performing the hot press are not particularly limited.

For example, the temperature is preferably 100°C to 400°C, more preferably 120°C to 350°C, and still more preferably 150°C to 300°C. By heating at 100°C to 400°C, the solid joining agent is efficiently deformed and melted and effectively wets and spreads on the joining surface, whereby a high joining force is obtained.

The pressurization force in the hot press is preferably 0.01 to 20 MPa, more preferably 0.1 to 10 MPa, and still more preferably 0.2 to 5 MPa. When the pressure is in such a range, the solid joining agent is efficiently deformed to effectively wet and spread on the joining surface, so that a high joining force can be obtained.

The conditions for performing high-frequency induction welding are not particularly limited.

For example, the transmission frequency is preferably 0.1 to 3 MHz, and more preferably 0.5 to 2 MHz.

The high-frequency application time is preferably 0.1 to 120 seconds, and more preferably 1 to 60 seconds, from the viewpoint of adhesiveness and appearance.

In a case where the base material A and the base material B are pressurized at the time of high-frequency application, the pressurizing force is preferably 0.01 to 20 MPa, more preferably 0.1 to 10 MPa, and still more preferably 0.2 to 5 MPa. When the pressure is in such a range, the solid joining agent is efficiently deformed to effectively wet and spread on the bonding surface, so that a high bonding force can be obtained.

The conditions for performing high-frequency induction welding are not particularly limited.

For example, the output may be in a range of 100 to 10000 W.

The conditions for performing ultrasonic welding are not particularly limited.

For example, the transmission frequency is preferably 10 to 70 kHz, and more preferably 15 to 40 kHz.

The ultrasonic wave application time is preferably 0.1 to 3 seconds, and more preferably 0.2 to 2 seconds, from the viewpoint of adhesiveness and appearance.

When the base material A and the base material B are pressurized during ultrasonic wave application, the pressurization force is preferably 0.01 to 20 MPa, more preferably 0.1 to 10 MPa, and still more preferably 0.2 to 5 MPa. When the pressure is in such a range, the solid joining agent is efficiently deformed to effectively wet and spread on the bonding surface, so that a high bonding force can be obtained.

The conditions for performing ultrasonic welding are not particularly limited.

For example, the oscillation frequency is in a range of 1 to 1500 kHz. The oscillation frequency may be adjusted to an appropriate oscillation frequency according to the size and type of the base material A and the base material B.

The output may be in a range of 100 to 5000 W.

The oscillation time may be adjusted according to the size and type of the base material A and the base material B, and is, for example, preferably 1.0 to 10.0 seconds, and more preferably 1.5 to 8.0 seconds.

As described above, the joining of the base material A and the base material B utilizes the phase change (solid to liquid to solid) of the solid joining agent and does not involve a chemical reaction, so that the joining can be completed in a shorter time than that of the conventional thermosetting epoxy resin.

[Joined Body]

Fig. 1 shows one embodiment of the joined body of the present invention. A joined body 1 shown in Fig. 1 is obtained by integrally joining a base material A (3), which is a fiber reinforced plastic base material, and a metal base material B (4), which is a metal base material, via a joining layer 2 in which a solid joining agent containing an amorphous thermoplastic resin which is at least one selected from a thermoplastic epoxy resin and a phenoxy resin is melted and then solidified. The joined body of the present invention exhibits excellent joining strength even when it is a joined body of different kinds of materials. Since the joining strength is affected by many factors such as the thickness of the joining layer, the molecular weight and chemical structure of the polymer constituting the solid joining agent, mechanical properties, and viscoelastic properties, in addition to the strength of the interfacial interaction acting between the joining layer and the base material A and between the joining layer and the base material B, the details of the mechanism by which the joined body of the present invention exhibits excellent joining strength are not clear, but it is presumed that the main factors are that the cohesive force in the amorphous thermoplastic resin constituting the joining layer 2 is low, and that hydroxy groups exist in the resin to form chemical bonds and intermolecular forces such as hydrogen bonds and van der Waals forces at the interfaces between the joining layer and the base material A and between the joining layer and the base material B. However, in the above-mentioned joined body, the state or characteristic of the above-mentioned interface of the above-mentioned joined body is a very thin chemical structure at the nanometer level or less, which is difficult to analyze, and it is impossible or impractical in the present technology to express it so as to distinguish it from that not due to the use of a solid joining agent by specifying it.

The joined body of the present invention in which the joining layer is made of a thermoplastic resin is excellent in recycling property and repairing property, and can be easily disassembled into the base material A and the base material B by heating the joined body.

The base material A is not limited to a specific fiber reinforced plastic (FRP), and examples thereof include glass fiber reinforced plastic (GFRP), carbon fiber reinforced plastic (CFRP), boron fiber reinforced plastic (BFRP), and aramid fiber reinforced plastic (AFRP) whose strength is improved by combining various fibers with thermosetting resins such as urethane resins, epoxy resins, vinyl ester resins, unsaturated polyesters, polyamide resins, and phenol resins. Examples thereof also include molded object from glass fibers and carbon fibers SMC (sheet molding compounds).

The base material B is not limited to a specific metal, and examples thereof include iron, aluminum, copper, magnesium, and titanium. Among these, aluminum and copper are particularly suitably used from the viewpoint of lightness, ease of processing, and the like. In the present disclosure, the term "aluminum" is used to include aluminum and alloys thereof. Similarly, iron, copper, aluminum, magnesium, and titanium are also used to include these simple substances and alloys thereof (stainless steel, duralumin, and the like).

The shapes of the base material A and the base material B are not particularly limited.

A high bonding force may be obtained by subjecting the base material A and the base material B to a pretreatment suitable for each base material.

Examples of the pretreatment include a pretreatment for cleaning the surface of the base material and a pretreatment imparting irregularities on the surface. Specific examples of the pretreatment include a degreasing treatment, an UV ozone treatment, a blasting treatment, a polishing treatment, a plasma treatment, a corona discharge treatment, a laser treatment, an etching treatment, and a flame treatment. One kind of the pretreatment may be carried out alone, or two or more kinds thereof may be carried out. Known methods can be used as specific methods for these pretreatments.

The degreasing treatment is a method for dissolving dirt such as fat and oil on the base material surface with, for example, an organic solvent such as acetone and toluene to remove dirt.

The UV ozone treatment is a method for cleaning and modifying a surface by the energy of ultraviolet rays with short wavelengths emitted from a low-pressure mercury lamp and the power of ozone ($O_3$) generated thereby. In a case of glass, the UV ozone treatment is one surface cleaning method for removing organic impurities on a surface. In general, a cleaned surface modifying device using a low-pressure mercury lamp is referred to as an "UV ozone cleaner", an "UV cleaning device", an "ultraviolet surface modifying device", and the like.

Examples of the blasting treatment include a wet blasting treatment, a shot blasting treatment, and a sandblasting treatment. Among these, a wet blasting treatment is preferable because a denser surface can be obtained as compared with a dry blasting treatment.

Examples of the polishing treatment include buffing using a polishing cloth, roll polishing using polishing paper (sandpaper), and electrolytic polishing.

The plasma treatment creates a plasma beam with a high-voltage power supply and a rod and causes the plasma beam to impinge on a material surface to excite molecules and functionalize the molecules, and includes an atmospheric pressure plasma treatment method capable of imparting hydroxy groups or polar groups onto a material surface, for example.

The corona discharge treatment includes a method applied for surface modification of a polymer film and is a method for generating hydroxy groups or polar groups on a surface, beginning at radicals generated by cutting, with electrons emitted from an electrode, polymer main chains or side chains on a polymer surface layer.

The laser treatment is a technique improving surface characteristics by rapidly heating only a surface of a base material with laser irradiation and cooling same, and is an effective method for surface coarsening. Known laser treatment techniques can be used.

Examples of the etching treatment include chemical etching treatments such as an alkali method, a phosphoric acid-sulfuric acid method, a fluoride method, a chromic acid-sulfuric acid method, and a salt iron method, and electrochemical etching treatments such as an electrolytic etching method.

The flame treatment is a method combusting a mixed gas of a combustion gas and air to generate plasma from oxygen in the air and trying to make a surface hydrophilic by imparting the oxygen plasma to an object to be treated. Known flame treatment techniques can be used.

Examples

Next, specific examples of the present invention will be described, but the present invention is not particularly limited to these Examples. In the following Examples, the base material A and the base material B are collectively referred to as joining base materials.

<Joining Base Materials>

The following joining base materials were used.

Base material A:

<<PA6 (6-Nylon)-CF40>>

Plastron PA6-CF40-01 (L9) manufactured by Daicel Corporation was injection-molded to obtain a test piece having a width of 10 mm, a length of 45 mm, and a thickness of 3 mm. The test piece was used without surface treatment.

Base material B:

<<Aluminum>>

The surface of A6061-T6 was subjected to blasting treatment to obtain a test piece having a width of 10 mm, a length of 45 mm, and a thickness of 3 mm.

<Weight-Average Molecular Weight, Heat of Fusion, and Epoxy Equivalent of Thermoplastic Epoxy Resin and Phenoxy Resin>

The weight average molecular weight, the heat of fusion, and the epoxy equivalent of the joining agent were each determined as follows.

(Weight-average molecular weight)

The thermoplastic epoxy resin and the phenoxy resin were dissolved in tetrahydrofuran and measured under the following conditions using Prominence 501 (manufactured by SHOWA SCIENCE CO., LTD., Detector: Shodex (registered trademark) RI-501 (manufactured by Showa Denko K.K.)).

Column: LF-804 manufactured by Showa Denko K.K. $\times$ 2
Column temperature: 40°C
Sample: 0.4% by mass tetrahydrofuran solution of resin
Flow rate: 1 mL/minute
Eluent: tetrahydrofuran

Calibration method: standard polystyrene equivalent

(Heat of Fusion)

The thermoplastic epoxy resin and the phenoxy resin were weighed in an amount of 2 to 10 mg, placed in an aluminum pan, and heated from 23°C to 200°C at a rate of 10°C/min by DSC (DSC8231, manufactured by Rigaku Corporation) to obtain a DSC curve. The heat of fusion was calculated from the area of the endothermic peak at the time of melting in the DSC curve and the weighed value.

(Epoxy Equivalent)

The epoxy equivalent was measured in accordance with JIS K 7236:2001 and converted into a value as a resin solid content. In the case of a simple mixture that does not involve a reaction, the epoxy equivalent was calculated from each epoxy equivalent and content.

<Example 1>

(Solid joining agent P-1)

Into a reaction device equipped with a stirrer, a reflux condenser, a gas introduction tube, and a thermometer, were put 1.0 equivalent (203 g) of jER (registered trademark) 1007 (manufactured by Mitsubishi Chemical Corporation, bisphenol A-type epoxy resin, weight average molecular weight: about 10,000), 1.0 equivalent (12.5 g) of bisphenol S, 2.4 g of triphenylphosphine, and 1,000 g of methyl ethyl ketone, and the temperature was increased to 100°C while stirring in a nitrogen atmosphere. Completion of dissolution was visually confirmed, and the mixture was cooled to 40°C to obtain a resin composition having a solid content of about 20% by mass. The solvent was removed therefrom to obtain a solid. A non-adhesive fluororesin film (NITOFLON (registered trademark) No. 900UL, manufactured by Nitto Denko Corporation) was installed on the upper plate and the lower plate of a press machine, the solid was disposed on the non-adhesive fluororesin film of the lower plate, then the press machine was heated to 160°C, and the resin composition was heated and compressed for 2 hours to obtain a film-shaped solid joining agent (P-1) having a solid content of 100% by mass and a thickness of 100 μm. The weight-average molecular weight was about 37,000. The epoxy equivalent was equal to or higher than the detection limit. No heat of fusion peak was detected in DSC.

(Joined body: base material A <<PA6 (6-Nylon)-CF40>>, base material B <<aluminum>>)

The solid joining agent P-1 cut into a size of 10 × 15 mm was disposed on the aluminum base material (base material B), and immediately thereafter, the PA6-CF base material (base material A) was disposed thereon. The base materials were overlapped with each other at a width of 10 mm and a depth of 5 mm. The solid joining agent P-1 was disposed so as to cover all the overlapped regions of the base materials. That is, the base material A and the base material B were not in direct contact with each other, and the solid joining agent was interposed between the base material A and the base material B to prepare an un-joined laminated body. In the description herein, the term "immediately thereafter" means within about 30 minutes.
In addition, for open time evaluation, a joined body for open time evaluation was also produced in the same manner as described above except that the solid joining agent P-1 was disposed on the aluminum base material (base material B), then left to stand for 3 days, and then the PA6-CF base material (base material A) was placed thereon.
Using a high-frequency induction welding machine (manufactured by Seidensha Electronics Co., Ltd., Oscillator UH-2.5K, Press JIIP30S), the metal was caused to generate heat by high-frequency induction, and the test pieces were joined to each other by heating and pressurization. The pressurization force was 110 N (pressure: 2.2 MPa), and the oscillation frequency was 900 kHz. The oscillation time was set to 5 seconds.

<Example 2>

(Solid joining agent P-2)

Into a reaction device equipped with a stirrer, a reflux condenser, a gas introduction tube, and a thermometer, 20 g of Phenotohto (registered trademark) YP-50S (manufactured by NIPPON STEEL Chemical & Material Co., Ltd., phenoxy resin, weight average molecular weight: about 50,000) and 80 g of cyclohexanone were charged, the temperature was raised to 60°C while stirring, completion of dissolution was visually confirmed, and the temperature was cooled to 40°C, thereby obtaining a resin composition having a solid content of 20% by mass. The solvent was removed therefrom to obtain a film-shaped solid joining agent (P-2) having a solid content of 100% by mass and a thickness of 100 μm. The weight-average molecular weight was 50,000, and the epoxy equivalent was equal to or higher than the detection limit. No heat of fusion peak was detected in DSC.

(Joined body)

A joined body and a joined body for open time evaluation were produced in the same manner as in Example 1 except that P-2 was used as the solid joining agent.

<Example 3>

(Solid joining agent P-3)

The resin composition P-2 and a crystalline epoxy resin YSLV-80XY (manufactured by NIPPON STEEL Chemical & Material Co., Ltd.) were mixed at a mass ratio of 98:2 to obtain a solid joining agent (P-3). The weight-average molecular weight was 36,000, the epoxy equivalent was 9600 g/eq, and the heat of fusion was 2 J/g.

(Joined body)

A joined body and a joined body for open time evaluation were produced in the same manner as in Example 1 except that P-3 was used as the solid joining agent.

<Example 4>

(Solid joining agent P-4)

The resin composition P-2 and a crystalline epoxy resin YSLV-80XY (manufactured by NIPPON STEEL Chemical & Material Co., Ltd.) were mixed at a mass ratio of 94:6 to obtain a solid joining agent (P-4). The weight-average molecular weight was 35,000, the epoxy equivalent was 2100 g/eq, and the heat of fusion was 4 J/g.

(Joined body)

A joined body and a joined body for open time evaluation were produced in the same manner as in Example 1 except that P-4 was used as the solid joining agent.

<Example 5>

(Solid joining agent P-5)

The resin composition P-2 and a crystalline epoxy resin YSLV-80XY (manufactured by NIPPON STEEL Chemical & Material Co., Ltd.) were mixed at a mass ratio of 89:11 to obtain a solid joining agent (P-5). The weight-average molecular weight was 33,000, the epoxy equivalent was 1745 g/eq, and the heat of fusion was 11 J/g.

(Joined body)

A joined body and a joined body for open time evaluation were produced in the same manner as in Example 1 except that P-5 was used as the solid joining agent.

<Example 6>

(Solid joining agent P-6)

Into a reaction device equipped with a stirrer, a reflux condenser, a gas introduction tube, and a thermometer, were put 1.0 equivalent (203 g) of jER (registered trademark) 1007 (manufactured by Mitsubishi Chemical Corporation, bisphenol A-type epoxy resin, molecular weight: about 4,060), 0.6 equivalents (12.5 g) of bisphenol S (molecular weight: 250), 2.4 g of triphenylphosphine, and 1,000 g of methyl ethyl ketone, and the temperature was increased to 100°C while stirring in a nitrogen atmosphere. Completion of dissolution was visually confirmed, and the mixture was cooled to 40°C to obtain a resin composition having a solid content of about 20% by mass. The solvent was removed therefrom to obtain a solid. A non-adhesive fluororesin film (NITOFLON (registered trademark) No. 900UL, manufactured by Nitto Denko Corporation) was installed on the upper plate and the lower plate of a press machine, the solid was disposed on the non-adhesive fluororesin film of the lower plate, then the press machine was heated to 160°C, and the resin composition was heated and compressed for 2 hours to obtain a film-shaped solid joining agent (P-6) having a solid content of 100% by mass and a thickness of 100 $\mu$m. The weight-average molecular weight was about 30,000, and the epoxy equivalent was equal to or higher than the detection limit. No heat of fusion peak was detected in DSC.

(Joined body)

A joined body and a joined body for open time evaluation were produced in the same manner as in Example 1 except that P-6 was used as the solid joining agent.

<Example 7>

A joined body was obtained in the same manner as in Example 1 except that in producing the joined body, the solid joining agent P-1 was disposed on the aluminum base material (base material B), the film was melted by heating on a hot plate at 200°C for 1 minute, then was allowed to cool at ordinary temperature for 1 minute to solidify the film, the aluminum base material (base material B) and the film were joined, and then the PA6-CF base material (base material A) and a joining material were laminated such that they were in contact with each other.

<Comparative Example 1>

(Solid joining agent Q-1)

Two liquids of a thermosetting liquid epoxy adhesive E-250 (manufactured by Konishi Co., Ltd., a two liquid type of a bisphenol-type epoxy resin and an amine curing agent) were mixed, applied to a release film, cured at 100°C for 1 hour, cooled, and peeled off from the release film to obtain a film-shaped solid joining agent (Q-1) having a thickness of 100 $\mu$m. No heat of fusion peak was detected in DSC. The epoxy equivalent and the weight-average molecular weight could not be measured due to insolubility in the solvent.

(Joined body)

A joined body and a joined body for open time evaluation were produced in the same manner as in Example 1 except that Q-1 was used as the solid joining agent.

<Comparative Example 2>

(Solid joining agent Q-2)

An amorphous polycarbonate film (Iupilon (registered trademark) FE2000, manufactured by Mitsubishi Engineering-Plastics Corporation, thickness: 100 $\mu$m) was used as a solid joined body Q-2. No heat of fusion peak was detected in DSC.

(Joined body)

A joined body and a joined body for open time evaluation were produced in the same manner as in Example 1 except that Q-2 was used as the solid joining agent.

<Comparative Example 3>

(Solid joining agent Q-3)

A crystalline epoxy resin YSLV-80XY (manufactured by NIPPON STEEL Chemical & Material Co., Ltd.) was used as a solid joining agent (Q-3). The epoxy equivalent was 192 g/eq. The weight-average molecular weight was 340. The heat of fusion was 70 J/g.

(Joined body)

A joined body and a joined body for open time evaluation were produced in the same manner as in Example 1 except that Q-3 was used as the solid joining agent.

<Comparative Example 4>

(Joined body)

Two liquids of a thermosetting liquid epoxy adhesive E-250 (manufactured by KONISHI Co., Ltd., a two-liquid type of a bisphenol-type epoxy resin and an amine curing agent) were mixed, applied to the base material A and the base material B similar to those in Example 1, bonded to each other within one minute, and then left to stand in an oven at 100°C for one hour in a state of being fixed with a clip to cure the adhesive component, and then cooled to ordinary temperature to produce a joined body.

In addition, a joined body for open time evaluation was also produced in the same manner as described above except that the thermosetting liquid epoxy adhesive E-250 was applied to the base material A and the base material B, and then the base material A and the base material B were allowed to stand for 3 days and then bonded to each other.

<Comparative Example 5>

A flask was charged with 1.0 equivalent (203 g) of jER (registered trademark) 1007 (manufactured by Mitsubishi Chemical Corporation, bisphenol A-type epoxy resin, weight average molecular weight: about 10,000), 1.0 equivalent (12.5 g) of bisphenol S, 2.4 g of triphenylphosphine, and 1,000 g of methyl ethyl ketone, and the mixture was stirred at room temperature to obtain a liquid resin composition having a solid content of about 20% by mass. The liquid resin composition was bar coated on the metal base material B similar to that in Example 1, dried at room temperature for 30 minutes, and then left to stand in an oven at 160°C for 2 hours to form a solid thermoplastic epoxy resin polymer coating layer having a thickness of 100 $\mu$m on the surface of the base material B. The weight-average molecular weight of the coating layer was about 40,000. The epoxy equivalent was equal to or higher than the detection limit. No heat of fusion peak was detected in DSC.

(Joined body)

A joined body was produced in the same manner as in Example 1 except that the base material A was directly disposed on the base material B having the coating layer.

In addition, for open time evaluation, a joined body for open time evaluation was also produced in the same manner as described above except that the thermoplastic epoxy resin polymer coating layer was formed on the surface of the base material B, then allowed to stand for 3 days, and then laminated with the base material A.

<Comparative Example 6>

Into a reaction device equipped with a stirrer, a reflux condenser, a gas introduction tube, and a thermometer, 20 g of Phenotohto (registered trademark) YP-50S (manufactured by NIPPON STEEL Chemical & Material Co., Ltd., phenoxy resin, weight average molecular weight: about 50,000) and 80 g of cyclohexanone were charged, the temperature was raised to 60°C while stirring, completion of dissolution was visually confirmed, and the temperature was cooled to 40°C, thereby obtaining a liquid resin composition having a solid content of 20% by mass. The liquid resin composition was bar coated on the base material B similar to that in Example 1, and left to stand in an oven at 70°C for 30 minutes to form a phenoxy resin coating layer having a thickness of 100 $\mu$m on the surface of the base material B. The weight-average molecular weight of the coating layer was about 50,000. The epoxy equivalent was equal to or higher than the detection limit. No heat of fusion peak was detected in DSC.

(Joined body)

A joined body was produced in the same manner as in Example 1 except that the base material A was directly disposed on the base material B having the phenoxy resin coating layer.

In addition, for open time evaluation, a joined body for open time evaluation was also produced in the same manner as described above except that the phenoxy resin coating layer was formed on the surface of the base material B, then allowed to stand for 3 days, and then laminated with the base material A.

<Comparative Example 7>

(Joined body)

A joined body and a joined body for open time evaluation were produced in the same manner as in Example 1, except that a crystalline polyamide-based hot-melt adhesive film NT-120 (manufactured by Nihon Matai Co., Ltd., thickness: 100 μm) was used as the solid joining agent. The heat of fusion was 60 J/g.

[Shear Bonding Force]

Each of the joined bodies obtained in Examples 1 to 7 and Comparative Examples 1 to 7 was allowed to stand at a measurement temperature (23°C or 80°C) for 30 minutes or more, and then a tensile shear bonding strength test was performed in 23°C and 80°C atmospheres using a tensile testing machine (universal testing machine Autograph "AG-X plus" (manufactured by Shimadzu Corporation); load cell 10 kN, tensile speed 10 mm/min) in accordance with ISO19095 to measure the joining strength. The measurement results are shown in Table 1-1 and Table 1-2.

[Joining Process Time]

The joining process time was measured as follows.
It was measured from a start point to an end point, with the contact time between at least one of the base materials constituting the joined body and the joining agent as the start point and the completion time of the production of the joined body as the end point. The measurement results are shown in Table 1-1 and Table 1-2.

[Recycling Property]

The recycling property was determined based on whether the joined body could be easily peeled off with a force of 1 N or less after being placed on a hot plate at 200°C and heated for 1 minute. When the joined body could be peeled off, it was evaluated as good (A), and when not, it was evaluated as poor (B). The evaluation results are shown in Table 1-1 and Table 1-2.

[Repairing Property]

After the tensile shear strength test at 23°C, the base material A was arranged on the base material B of test pieces having a ruptured bonding surface (the layer of the joined solid remained on the surface of the base material A or B, or both), and a joined body was prepared in the same manner as in Example 1, thereby obtaining a repaired joined body. The shear bonding force of the repair-joined body at 23°C was measured in the same manner as the above-mentioned test method, and it was evaluated as good (A) when the shear bonding force was 80% or more of the first shear joining force, and it was evaluated as poor (B) when the shear joining force was less than 80%. The evaluation results are shown in Table 1-1 and Table 1-2.

[Open Time Evaluation]

Using the joined body for open time evaluation, the tensile shear bonding strength test was performed at 23°C. When the shear bonding force was 80% or more as compared with the test pieces prepared by the methods of the above-described Examples and Comparative Examples, it was evaluated as good (A), and when it was less than 80%, it was evaluated as poor (B). When the open time evaluation is good (A), it means that the open time is long and the convenience is excellent. The evaluation results are shown in Table 1-1 and Table 1-2.

[Table 1-1]

Table 1-1

| | | | Example 1 | Example 2 | Example 3 | Example 4 |
|---|---|---|---|---|---|---|
| Properties of joining agent | | Form of joining agent | Film | Film | Film | Film |
| | | Resin main component | Thermoplastic epoxy resin | Phenoxy resin | Thermoplastic epoxy resin | Thermoplastic epoxy resin |
| | | Weight-average molecular weight | 37,000 | 50,000 | 36,000 | 35,000 |
| | | Heat of fusion [J/g] | No melting peak | No melting peak | 2 | 4 |
| | | Epoxy equivalent [g/eq] | Equal to or higher than detection limit | Equal to or higher than detection limit | 9,600 | 2,100 |
| Bonding force | CFRP (base material A)/aluminum (base material B) | Shear bonding force [MPa] at 23°C | 30 | 28 | 30 | 27 |
| | | Shear bonding force [MPa] at 80°C | 21 | 20 | 18 | 17 |
| Convenience | | Joining process time | 10 sec | 10 sec | 10 sec | 10 sec |
| | | Recycling property | A | A | A | A |
| | | Repairing property | A | A | A | A |
| | | Open time evaluation | A | A | A | A |

Table 1-1 (continued)

| | | | Example 5 | Example 6 | Example 7 |
|---|---|---|---|---|---|
| Properties of joining agent | | Form of joining agent | Film | Film | Film |
| | | Resin main component | Thermoplastic epoxy resin | Thermoplastic epoxy resin | Thermoplastic epoxy resin |
| | | Weight-average molecular weight | 33,000 | 30,000 | 37,000 |
| | | Heat of fusion [J/g] | 11 | No melting peak | No melting peak |
| | | Epoxy equivalent [g/eq] | 1,745 | Equal to or higher than detection limit | Equal to or higher than detection limit |
| Bonding force | CFRP (base material A)/aluminum (base material B) | Shear bonding force [MPa] at 23°C | 25 | 28 | 30 |
| | | Shear bonding force [MPa] at 80°C | 15 | 18 | 20 |

(continued)

|  |  | Example 5 | Example 6 | Example 7 |
|---|---|---|---|---|
| Convenience | Joining process time | 10 sec | 10 sec | 2 min |
|  | Recycling property | A | A | A |
|  | Repairing property | A | A | A |
|  | Open time evaluation | A | A | A |

[Table 1-2]

Table 1-2

|  |  |  | Comparative Example 1 | Comparative Example 2 | Comparative Example 3 | Comparative Example 4 |
|---|---|---|---|---|---|---|
| Properties of joining agent |  | Form of joining agent | Film | Film | Film | Liquid |
|  |  | Resin main component | Thermosetting epoxy resin | Polycarbonate | Epoxy resin | Thermosetting epoxy resin |
|  |  | Weight-average molecular weight | - | - | 340 | - |
|  |  | Heat of fusion [J/g] | No melting peak | No melting peak | 70 | No melting peak |
|  |  | Epoxy equivalent [g/eq] | - | - | 192 | - |
| Bonding force | CFRP (base material A)/aluminum (base material B) | Shear bonding force [MPa] at 23°C | 0 | 10 | 2 | 20 |
|  |  | Shear bonding force [MPa] at 80°C | 0 | 8 | 0 | 18 |
| Convenience | Joining process time |  | 10 sec | 10 sec | 10 sec | 70 min |
|  | Recycling property |  | B | A | A | A |
|  | Repairing property |  | B | A | A | B |
|  | Open time evaluation |  | B | A | A | B |

Table 1-2 (continued)

| | | | Comparative Example 5 | Comparative Example 6 | Comparative Example 7 |
|---|---|---|---|---|---|
| Properties of joining agent | | Form of joining agent | Coating layer | Coating layer | Film |
| | | Resin main component | Thermoplastic epoxy resin | Phenoxy resin | Polyamide |
| | | Weight-average molecular weight | 40,000 | 50,000 | - |
| | | Heat of fusion [J/g] | No melting peak | No melting peak | 60 |
| | | Epoxy equivalent [g/eq] | Equal to or higher than detection limit | Equal to or higher than detection limit | - |
| Bonding force | CFRP (base material A)/aluminum (base material B) | Shear bonding force [MPa] at 23°C | 30 | 30 | 10 |
| | | Shear bonding force [MPa] at 80°C | 20 | 20 | 5 |
| Convenience | | Joining process time | 150 min | 32 min | 10 sec |
| | | Recycling property | A | A | A |
| | | Repairing property | A | A | A |
| | | Open time evaluation | A | A | A |

Industrial Applicability

The joined body obtained by the production method of the present invention is used, for example, as automobile components, such as a door side panel, an engine hood roof, a tailgate, a steering hanger, an A pillar, a B pillar, a C pillar, a D pillar, a crush box, a power control unit (PCU) housing, an electric compressor component (such as an inner wall, an intake port, an exhaust control valve (ECV) insertion part, and a mount boss), a lithium ion battery (LIB) spacer, a battery case, and an LED head lamp, and as structural members of a smartphone, a notebook personal computer, a tablet personal computer, a smartwatch, a large size liquid crystal display television set (LCD-TV), and an outdoor LED illumination, but are not particularly limited to these exemplified applications.

Reference Signs List

1: Joined body

2: Adhesive layer

3: Base material A

4: Base material B

**Claims**

1. A method for producing a joined body, the method including:

   a pre-joining step in which a laminated body is prepared by arranging, in the following order, a base material A, which is a fiber reinforced plastic base material, a solid joining agent containing an amorphous thermoplastic resin, which is at least one selected from a thermoplastic epoxy resin and a phenoxy resin, and a base material B, which is a metal base material; and

a joining step in which the laminated body is heated and pressurized to melt the solid joining agent and join the base material A and the base material B,

in which the amorphous thermoplastic resin has an epoxy equivalent of 1,600 or more or does not contain an epoxy group and has a heat of fusion of 15 J/g or less.

2. The method for producing a joined body according to claim 1, wherein the heating and pressurizing are performed under conditions of 100°C to 400°C and 0.01 to 20 MPa.

3. The method for producing a joined body according to claim 1 or 2, wherein the solid joining agent before melting has a film shape.

4. A method for producing a joined body obtained by joining, in the following order, a base material A, which is a fiber reinforced plastic base material, a solid joining agent containing an amorphous thermoplastic resin, which is at least one selected from a thermoplastic epoxy resin and a phenoxy resin, and a base material B, which is a metal base material, the method including:

a first joining step of joining the base material A and the solid joining agent by melting and then solidifying the solid joining agent in a state in which the solid joining agent is in contact with the base material A, or joining the base material B and the solid joining agent by melting and then solidifying the solid joining agent in a state in which the solid joining agent is in contact with the base material B; and

a second joining step of joining the base material A and the base material B by melting and then solidifying the solid joining agent in a state in which the solid joining agent joined to the base material A is in contact with the base material B, or joining the base material A and the base material B by melting and then solidifying the solid joining agent in a state in which the solid joining agent joined to the base material B is in contact with the base material A; in which the amorphous thermoplastic resin has an epoxy equivalent of 1,600 g/eq. or more or does not contain an epoxy group and has a heat of fusion of 15 J/g or less.

5. The method for producing a joined body according to claim 4, wherein in the first joining step, the solid joining agent is heated to 100°C to 300°C to be melted and then solidified.

6. The method for producing a joined body according to claim 4, wherein in the second joining step, the solid joining agent is melted by at least one selected from the group consisting of contact heating, warm air heating, hot press, infrared heating, hot plate welding, ultrasonic welding, vibration welding, and high-frequency induction welding and then solidified.

7. The method for producing a joined body according to claim 4, wherein in the second joining step, the solid joining agent is melted at a heating temperature of 100°C to 400°C under a pressure of 0.01 to 20 MPa and then solidified.

8. The method for producing a joined body according to any one of claims 1 to 7, wherein the solid joining agent before melting has a film shape.

9. A joined body obtained by joining a base material A, which is a fiber reinforced plastic base material, and a base material B, which is a metal base material, via an adhesive layer, in which the adhesive layer is formed by disposing a solid joining agent containing an amorphous thermoplastic resin, which is at least one selected from a thermoplastic epoxy resin and a phenoxy resin, and has an epoxy equivalent of 1,600 or more and a heat of fusion of 15 J/g or less, between the base material A and the base material B, melting the solid joining agent by heating and pressurizing, and solidifying the solid joining agent.

10. The joined body according to claim 9, wherein the heating and pressurizing are performed under conditions of 100°C to 400°C and 0.01 to 20 MPa.

[Fig. 1]

## INTERNATIONAL SEARCH REPORT

| | International application No. |
|---|---|
| | **PCT/JP2023/045380** |

**A. CLASSIFICATION OF SUBJECT MATTER**

*C09J 5/00*(2006.01)i; *C09J 163/00*(2006.01)i; *C09J 171/10*(2006.01)i
FI:    C09J5/00; C09J163/00; C09J171/10

According to International Patent Classification (IPC) or to both national classification and IPC

**B. FIELDS SEARCHED**

Minimum documentation searched (classification system followed by classification symbols)

C09J5/00; C09J163/00; C09J171/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2022/172863 A1 (SHOWA DENKO K.K.) 18 August 2022 (2022-08-18) paragraph [0031], examples 1-8 | 1-3, 8-10 |
| Y | paragraph [0031], examples 1-8 | 4-7 |
| X | WO 2022/209116 A1 (NIPPON STEEL CHEMICAL & MAT CO., LTD.) 06 October 2022 (2022-10-06) paragraphs [0043]-[0048], examples 5-7 | 1-3, 8-10 |
| Y | paragraphs [0043]-[0048], examples 5-7 | 4-7 |
| X | WO 2022/014503 A1 (NIPPON STEEL CHEMICAL & MATERIAL CO., LTD.) 20 January 2022 (2022-01-20) paragraphs [0037]-[0044], examples 8-14 | 1-3, 8-10 |
| Y | paragraphs [0037]-[0044], examples 8-14 | 4-7 |
| Y | JP 2019-73663 A (TOYO INK SC HOLDINGS CO., LTD.) 16 May 2019 (2019-05-16) claims | 4-7 |
| A | claims | 1-3, 8-10 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 January 2024** | **30 January 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

| International application No. |
|---|
| **PCT/JP2023/045380** |

**C.    DOCUMENTS CONSIDERED TO BE RELEVANT**

| Category* | Citation of document, with indication, where appropriate, of the relevant passages | Relevant to claim No. |
|---|---|---|
| Y | JP 2013-256037 A (OMURA KK) 26 December 2013 (2013-12-26) | 4-7 |
|  | claims |  |
| A | claims | 1-3, 8-10 |
| Y | JP 2011-195794 A (KURAMOTO SANGYO KK) 06 October 2011 (2011-10-06) | 4-7 |
|  | claims |  |
| A | claims | 1-3, 8-10 |

Form PCT/ISA/210 (second sheet) (July 2022)

# INTERNATIONAL SEARCH REPORT
### Information on patent family members

International application No.

**PCT/JP2023/045380**

| Patent document cited in search report | | | Publication date (day/month/year) | Patent family member(s) | | | Publication date (day/month/year) |
|---|---|---|---|---|---|---|---|
| WO | 2022/172863 | A1 | 18 August 2022 | TW | 202235564 | A | |
| WO | 2022/209116 | A1 | 06 October 2022 | (Family: none) | | | |
| WO | 2022/014503 | A1 | 20 January 2022 | US | 2023/0279278 | A1 | |
| | | | | paragraphs [0064]-[0073], examples 8-14 | | | |
| | | | | EP | 4180494 | A1 | |
| | | | | CN | 115836118 | A | |
| | | | | KR | 10-2023-0038196 | A | |
| JP | 2019-73663 | A | 16 May 2019 | (Family: none) | | | |
| JP | 2013-256037 | A | 26 December 2013 | (Family: none) | | | |
| JP | 2011-195794 | A | 06 October 2011 | (Family: none) | | | |

Form PCT/ISA/210 (patent family annex) (July 2022)

**REFERENCES CITED IN THE DESCRIPTION**

**Patent documents cited in the description**

- JP 2019157018 A
- JP H1017685 A

- JP H10168417 A